# FASCICULE DE BREVET EUROPEEN

(11) **EP 3 010 347 B1**
(45) Date de publication et mention de la délivrance du brevet: **23.08.2017**
(21) Numéro de dépôt: 14738874.8
(22) Date de dépôt: 16.06.2014
(51) Int. Cl.: A01N 59/04, A01M 1/02, A01P 19/00

(54) **PROCÉDÉ DE CAPTURE DE MOUSTIQUES PAR PRODUCTION DE DIOXYDE DE CARBONE A PARTIR DE L'AIR AMBIANT**
VERFAHREN ZUR ERFASSUNG VON MOSKITOS DURCH ERZEUGUNG VON KOHLENDIOXID AUS UMGEBUNGSLUFT
METHOD FOR CAPTURING MOSQUITOES BY PRODUCING CARBON DIOXIDE FROM THE AMBIENT AIR

(30) Priorité: 17.06.2013 FR 1301405
(43) Date de publication de la demande: 27.04.2016
(73) Titulaire: HBM Distribution, 06140 Vence (FR)
(72) Inventeur: HAUPTMANN, Dominique, 06570 Saint Paul de Vence (FR); BENBASSAT, Gérard, 06570 Vence (FR)
(74) Mandataire: Dadoun, Aimée
(86) Numéro de dépôt international: PCT/FR2014/000133
(87) Numéro de publication internationale: WO 2014/202843

(56) Documents cités:
- WO-A1-2006/108244
- US-A1- 2013 142 753
- US-B2- 7 347 994

## Description

L'invention concerne un procédé de capture de moustiques par production de dioxyde de carbone (CO₂) à partir de l'air ambiant ou atmosphérique.

L'homme cherche depuis longtemps à lutter contre les insectes piqueurs et notamment les moustiques, causes de démangeaisons et vecteurs de maladies. Il existe aujourd'hui des méthodes passives ou actives, biologiques ou chimiques, adaptées au stade de développement de ces insectes.

Il est connu que le CO₂, que les mammifères et les êtres humains en particulier exhalent, aide certains insectes à se repérer et à localiser leur source de nourriture. Ainsi, le CO2 que nous rejetons en respirant permet aux insectes, notamment le moustique de nous trouver, même dans l'obscurité la plus totale. Des chercheurs ont même identifié chez le moustique des récepteurs sensibles au CO₂.

Ainsi, l'homme a développé des techniques pour piéger les moustiques utilisant la diffusion de CO₂. Le principe des pièges à moustiques (femelles) adultes est le suivant :
- Le piège émet du CO2 en quantité « suffisante » de telle sorte que les moustiques femelles, en quête de sang pour nourrir leurs oeufs, se rapprochent du piège,
- Un second appât émettant des odeurs proches de celles de la peau, attirent les moustiques encore plus près du piège,
- Le piège dispose d'un procédé d'aspiration qui permet de capturer les moustiques.

La quantité de CO2 « suffisante », doit être du même ordre de grandeur que celle produite par la respiration d'un être humain, c'est-à-dire de l'ordre de 20 à 60g/heure. Jusqu'à présent les essais de génération chimique du CO2 (p. ex. à partir de la levure) n'ont pas permis d'atteindre ce niveau de production. Les deux seuls systèmes qui sont utilisés en pratique sont soit la combustion de gaz butane ou propane avec des bruleurs à combustion lente ou bien l'emploi de bouteilles de CO2 comprimé. Ces techniques sont décrites notamment dans les documents WO9937145, WO200332722, US20060156618 et WO2007135687.

Dans le cas de pièges uniques, utilisant les bouteilles classiques de 13kg de butane ou propane, qui vont durer environ un mois d'utilisation, cela est acceptable tant du point de vue du cout que de l'inconvénient qu'il y a de changer la bouteille. Mais, ces pièges uniques, censés protéger 1000m2 a 5000 m2, bien qu'ils capturent effectivement des moustiques, ne parviennent pas à vider de tels espaces de tous leurs moustiques et surtout n'empêchent pas les moustiques alentour de continuer à sévir.

Pour palier à ce manque, il a été développé le concept « Biobelt® » qui consiste à entourer une zone à protéger d'un ensemble de pièges, disposés tous les 8 à 10m et dont le nombre vari en fonction du périmètre de la zone à protéger. Ce principe s'est révélé très efficace, mais la contrepartie est une consommation accrue de CO₂.

L'utilisation des pièges classiques avec chacun leur bouteille de butane n'est envisageable ni d'un point de vue pratique ni d'un point de vue du cout du consommable. Aujourd'hui la seule solution viable est l'utilisation d'une bouteille de CO₂ qui alimente l'ensemble des pièges. Le problème est que, malgré un système de programmation horaire de diffusion du CO2 et une limitation du débit, les bouteilles doivent être renouvelées trop souvent. Par exemple pour un ensemble de 8 pièges, une bouteille de 10 kg de CO2 va devoir être renouvelée jusqu'à 2 fois par mois, ce qui est compliqué d'un point de vue logistique et très couteux. Cela constitue une vraie limite à la diffusion plus large de cette technologie, pourtant très efficace et très demandée.

En conséquence, il n'existe à l'heure actuelle aucune solution satisfaisante qui permette de capturer les moustiques de manière efficace et qui présente un cout raisonnable pour le particulier, et ce tout en étant respectueuse de l'environnement. Par ailleurs, des procédés de piégeage de moustiques par production de dioxyde de carbone sont décrits dans les documents US 2013/0142753, US 7,347,994 et WO 2006/108244.
Dans le contexte aujourd'hui du respect de l'environnement et dans un but d'efficacité, il est apparu donc nécessaire de mettre en oeuvre un procédé nouveau de capture des moustiques.

La présente invention permet de résoudre les problèmes énoncés ci-dessus, à savoir efficacité de la capture des moustiques, installation peu couteuse, pas d'inconvénient de changer les bouteilles de CO2 ni un autre consommable en vue de la production de CO2, et protection de l'environnement.

Ainsi, la présente invention concerne un procédé de capture de moustiques par production de dioxyde de carbone (CO₂) vers un ou plusieurs pièges à moustiques, le CO₂ étant séparé de l'air ambiant à travers au moins un système central comprenant au moins un lit de matériaux de type solide microporeux, ledit procédé permettant à partir d'un flux entrant d'air ambiant comprenant 0,039% de CO₂ dans le système central de produire vers un ou plusieurs pièges un flux sortant de CO2 à débit régulier et contrôlé comprenant au moins 10 g/heure/piège de CO2.

Dans la présente invention, on entend par :
- « capture de moustiques» le fait d'attirer les moustiques et les piéger dans un container clos.
- « piège à moustiques» un dispositif solide de forme adéquate permettant de laisser entrer les moustiques sans qu'ils puissent s'échapper une fois à l'intérieur.
- « système central » le système permettant de séparer le CO₂ de l'air ambiant pour ensuite libérer le CO₂ extrait pour l'acheminer vers les pièges à moustiques. Ce système doit comprendre au moins un lit de matériaux de type solide microporeux et peut comprendre deux voir quatre et plus de ce type de lits. Le système central peut faire partie du même dispositif que le piège à moustiques où peut être éloigné de celui-ci ou ceux-ci par une distance de plusieurs dizaines de mètre. Le système central peut en outre comprendre un leurre olfactif sous forme solide ou liquide permettant la diffusion de molécules attractives pour moustiques dans le flux sortant gazeux.
- « lit de matériaux de type solide microporeux » tout lit de matériaux permettant :
   - de séparer le CO₂ de l'air ambiant par adsorption,
   - le stockage du CO₂ extrait,
   - la libération ensuite du CO₂ par désorption,
pour qu'il soit acheminé vers les pièges à moustiques. Ces lits seront également appelés dans la présente invention « tamis moléculaire ». Afin d'en limiter le volume nécessaire, les matériaux de type solide microporeux doivent avoir une capacité d'adsorption du CO₂ suffisamment importante pour fournir, en présence ou pas d'une étape de séchage, un flux de CO₂ avec un débit égal ou supérieur à 10 g/heure/piège de CO₂.
En outre, le solide microporeux doit pouvoir supporter de nombreux cycles « d'adsorption/désorption » sans se dégrader de façon a ce qu'il puisse être utilisé pendant au moins une année voir plusieurs.
Le fonctionnement des lits de matériaux de type solide microporeux peut être alterné ou simultané.
- fonctionnement « alterné » du lit de matériau microporeux le fait que le lit de matériau effectue l'adsorption du CO2 pendant une durée de temps déterminée et ensuite désorbe le CO2 pendant une durée de temps déterminée.
- fonctionnement « simultané » des lits de matériau microporeux le fait qu'un lit de matériau adsorbe le CO2 pendant que l'autre lit de matériau effectue la désorption du CO2 pendant une durée de temps déterminée.
- « lit de dessiccation d'H2O ou appelé également tamis asséchant » des lits de matériau permettant d'éliminer l'H2O par adsorption puis désorption. On peut citer par exemple les Zéolithes de type 3A vendu notamment sous la dénomination Z303 par la société Zeochem.
- « débit régulier et contrôlé » un débit de CO2 régulier dans chaque piège dont l'intensité est constante pendant toute la période de diffusion, par exemple 10, 20, 30 ou 40 g/heure. Afin de réduire la consommation électrique quotidienne, un programmateur peut également être adjoint afin de limiter les périodes de diffusion du CO2 à certaines heures de la journée. Par exemple, au lever et coucher du soleil (période d'activité maximum des moustiques) et aux heures de présence humaine dans la zone protégée.
- « continu ou alternatif » le fait que le débit régulier contrôlé du flux sortant gazeux s'effectue de manière continue (sans arrêt du flux) ou de manière alternative (selon un cycle régulier d'arrêts/activité de quelques dizaines de secondes).
- « capacité d'adsorption » la capacité de séparation du CO₂ de l'air ambiant sur les lits de matériaux.
- « température ambiante » la température extérieure durant la journée ou la nuit pendant laquelle les moustiques sont actifs. Cette température peut varier de 15 à 40 degrés Celsius.
- une production avec « cycle court, cycle moyen et cycle long » une production de CO2 qui durent en moyenne 10 à 30 secondes, une heure et 10 heures respectivement.

Description des figures :

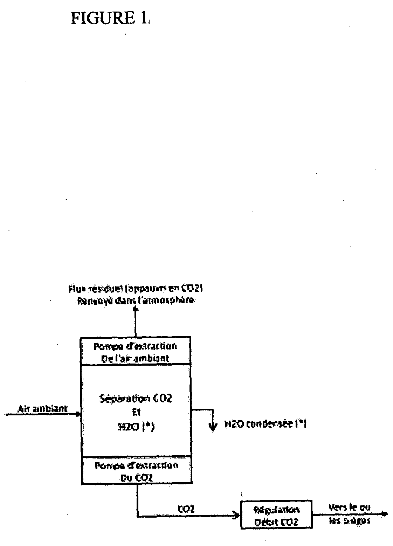

La figure 1 représente un schéma de principe du fonctionnement du procédé selon l'invention. L'astérix (*) dans la figure 1 est indiquée pour montrer qu'en fonction du tamis moléculaire choisi et du moyen de distribution du CO2 vers les pièges, il peut être nécessaire d'éliminer l'humidité de l'air.

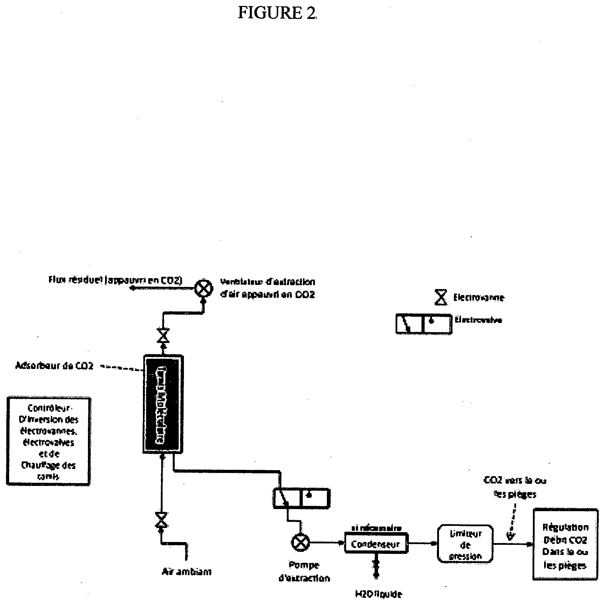

La figure 2 représente un schéma de principe détaillé d'un système de séparation et diffusion de CO₂ alterné sans dessiccation de l'air, avec un seul tamis moléculaire. Ce système est muni d'un contrôleur d'inversion des flux (adsorption, désorption) et de chauffage des tamis (désorption). Il faut noter que les valves d'inversion des tamis n'ont pas la même taille, pour l'admission de l'air une électrovanne de large section (par exemple 10 cm de diamètre) est nécessaire et pour la production du flux gazeux de CO2 une mini-valve de petite section est suffisante (quelques mm de diamètre). Si nécessaire, un condenseur d'eau est ajouté. Pour les moustiques qui dorment la nuit, tels que les Aedes Albopictus dit « tigre », le CO₂ peut être adsorbé et stocké durant la nuit puis restitué vers les pièges dans la journée.

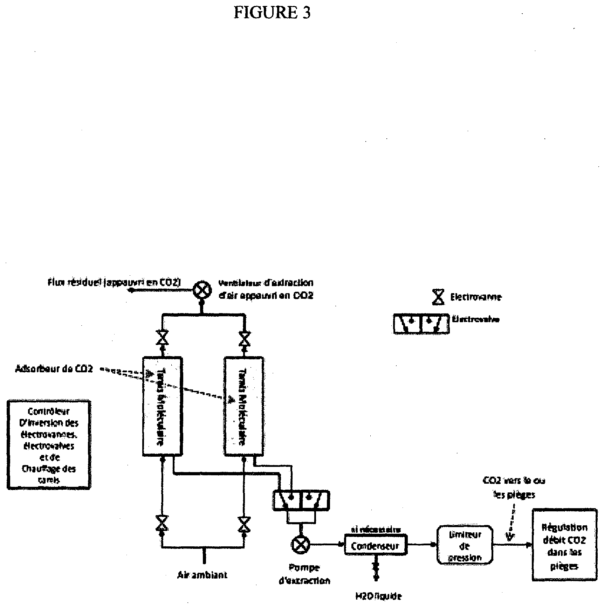

La figure 3 représente un schéma de principe détaillé d'un système de séparation et diffusion de CO₂ sans dessiccation de l'air entrant avec deux tamis moléculaires opérant alternativement en tandem. Ce système est muni d'un contrôleur d'inversion des flux (adsorption, désorption) et de chauffage des tamis (désorption). Si nécessaire, un condenseur d'eau est ajouté.

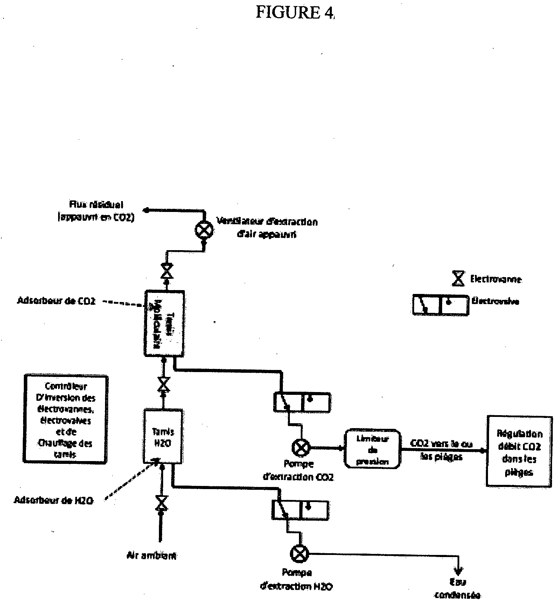

La figure 4 représente un schéma de principe détaillé d'un système de séparation et diffusion de CO₂ sans dessiccation de l'air entrant, avec un seul tamis moléculaire et un seul tamis H₂0 (dessiccation). Pour les moustiques qui dorment la nuit, tels que les Aedes Albopictus dit « tigre », le CO₂ peut être adsorbé et stocké durant la nuit puis restitué vers les pièges dans la journée.

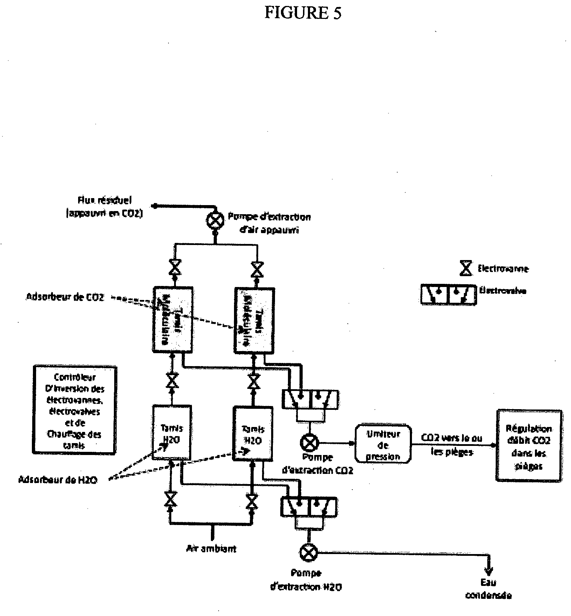

La figure 5 représente un schéma de principe détaillé d'un système de séparation et diffusion de CO₂ avec dessiccation de l'air entrant comprenant deux tamis moléculaires et deux tamis H₂0 (dessiccation).

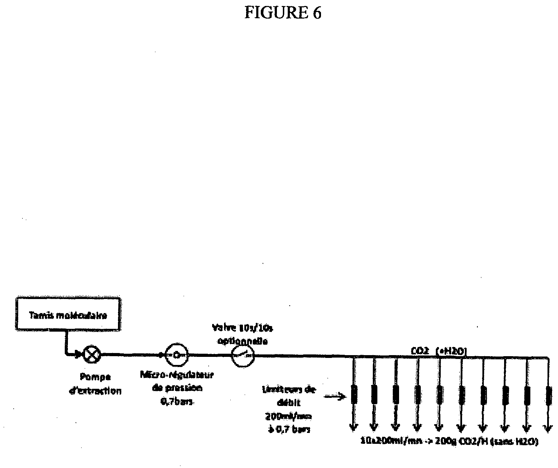

La figure 6 représente un schéma de principe de la phase de désorption du CO₂ avec le contrôle du débit et de la distribution du CO₂ vers des pièges multiples et distants de quelques dizaines de metres.

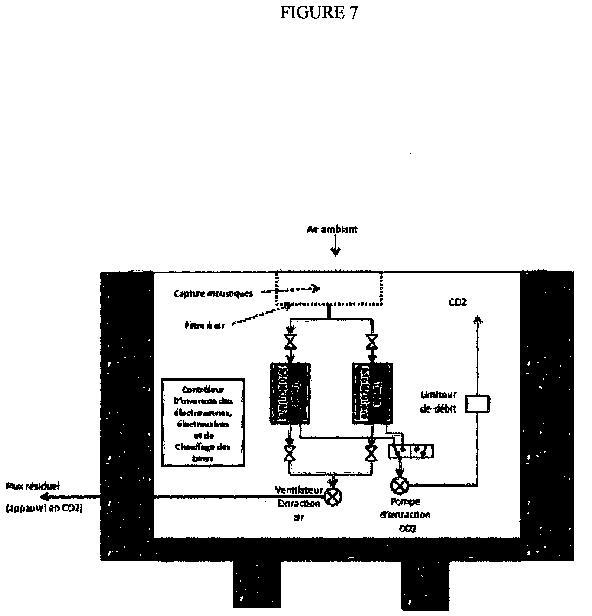

La figure 7 représente un dispositif du système central mettant en oeuvre le procédé de capture des moustiques selon l'invention comprenant deux tamis moléculaires opérant alternativement en tandem, n'alimentant qu'un seul piège et positionné dans le piège.

L'invention est décrite ci-après de manière plus détaillée avec en outre des modes de réalisation préférentiels.

Comme indiqué ci-dessus, le procédé selon l'invention permet de produire un flux sortant gazeux à débit régulier contrôlé de CO₂. Cette production ou diffusion de CO₂ sera bien entendu effectuée aux horaires auxquels les moustiques sont présents. Quand les moustiques sont des moustiques de type Aedes Albopictus, dit « tigre », ils dorment la nuit. Dans ce cas, le procédé mis en oeuvre selon l'invention permettra de produire un flux sortant gazeux le jour, avec au niveau du système central adsorption et stockage du CO₂ pendant la nuit et désorption du CO₂ durant le jour. La production de CO₂ à débit régulier contrôlé s'effectuera de jour.

Bien que la consommation électrique du procédé selon l'invention soit relativement modeste (au regard de la quantité de CO₂ séparée de l'air ambiant), il est possible de réduire son « empreinte carbone » en le munissant d'un capteur solaire pour fournir tout ou partie de l'énergie nécessaire au bon fonctionnement du procédé.

Dans un mode de réalisation préférentiel selon l'invention, le flux sortant gazeux du procédé selon l'invention est continu ou alternatif. Afin de réduire le coût du dispositif mettant en oeuvre le procédé selon l'invention ; il est préférable de réduire le débit moyen de CO₂ d'un facteur important, sans réduction d'efficacité en le diffusant de façon alternative, sur un cycle par exemple d'environ 20s : 10s de diffusion suivi d'un arrêt de diffusion de 10s.

Ainsi, le procédé de capture des moustiques selon l'invention comprendra un système central, comprenant un lit de matériaux de type microporeux et éventuellement un lit de dessiccation de l'eau (tamis H₂O), qui dessert en CO₂ un ou plusieurs pièges. Il n'est cependant pas exclu que le procédé comprenne plusieurs systèmes centraux, comprenant chacun un lit de matériaux de type microporeux et éventuellement un lit de dessiccation de l'eau (tamis H₂O), qui desservent chacun un ou plusieurs pièges. Ces différentes possibilités sont à mettre en place en fonction des dimensions du lieu que l'on veut protéger et de la densité des moustiques.

Dans un mode de réalisation plus préférentiel selon l'invention, le flux sortant gazeux comprend entre 50 et 100% de CO₂, le reste pouvant être de l'air humide. Le flux de CO₂ n'a pas besoin d'être pur, il peut être mélangé à de l'air ou de l'humidité. Puisque le CO2 est relâché dans l'air au niveau du piège, il s'y mélange et se disperse. Le paramètre important mentionné dans le procédé selon l'invention est le débit de CO₂ en masse, qui doit être au minimum d'une dizaine de grammes par heure, en moyenne.
Ainsi, le flux gazeux sortant peut comprendre un mélange CO2 + air + H2O avec les limites suivantes:
- Le flux gazeux total doit rester du même ordre de grandeur que le flux de CO2 pur, pour ne pas augmenter le coût de la distribution du flux vers les pièges, il doit donc comprendre au minimum 50% de CO2 dans le flux gazeux total,
- L'humidité doit être suffisamment faible pour ne pas provoquer de condensation dans le réseau de distribution du flux gazeux.
Ce mode de réalisation permet de limiter le coût de réalisation du procédé selon l'invention.

Dans un autre mode de réalisation selon l'invention, le flux sortant gazeux est composé de CO₂ pur. Ce mode de réalisation sera plus couteux mais est réalisable.

Dans un autre mode de réalisation préférentiel selon l'invention, le lit de matériaux de type solide microporeux présente une capacité d'adsorption du CO₂ au minimum de 0,4 mol/kg à pression atmosphérique et à température ambiante. De préférence la capacité d'absorption est de 0,7 à 0,8 mol/kg à pression atmosphérique et à température ambiante. Cette capacité permet le stockage, puis après désorption, la production du flux sortant gazeux de CO₂ d'au moins 10 g/heure/piège pour une dizaine de pièges. Ainsi, pour un procédé permettant d'alimenter 10 pièges, le débit du flux sortant gazeux sera un débit minimum de 200g/heure, le flux sortant gazeux étant postérieurement envoyé dans chaque piège pour une fourniture de 10g/heure/piège.

Dans encore un autre mode de réalisation très préférentiel selon l'invention, le lit de matériaux de type solide microporeux est constituée de zéolithes ou de celluloses greffées avec des amines.

A type d'exemple de tels matériaux préférés de type solide microporeux, on peut citer :
- les zéolites commerciales telles que les zéolithes Li-LSX (LowSilica X zéolite) qui ont des capacités d'adsorption importantes : 1,34 mol/kg soit 5,9% en masse¹. Ces matériaux étant extrêmement sensibles à l'humidité, une étape de séchage est indispensable. Dans ce cas, au moins un tamis de dessiccation de l'eau est ajouté dans le procédé de capture de moustiques selon l'invention. Ces tamis de dessiccation d'eau sont par exemple constitués de Zéolite type 3A, KA Les figures 4 et 5 présentent un schéma du procédé comprenant des tamis de dessiccation d'eau.
- la cellulose greffées aux amines^{2,3}. Ce matériau possède une capacité d'adsorption importante de 1,4 mol/kg (6,2% en masse) à pression atmosphérique et à température ambiante. Ce matériau a été utilisé pour la capture conjointe du CO₂ et de l'humidité dans une gamme de 20 à 80% d'humidité relative. La présence d'humidité s'avère favorable à l'adsorption du CO₂.

Dans un autre mode de réalisation préférentiel selon l'invention, le ou les lits de matériau microporeux permet l'adsorption, le stockage et la désorption du CO₂ de l'air ambiant de manière alternée ou simultanée.

Ainsi, le mode alterné se présente avec un système central comprenant un lit de matériau microporeux qui, pendant la nuit adsorbe et stocke le CO₂ de l'air ambiant et, pendant le jour, libère le CO₂ pour permettre une production à débit régulier contrôlé de CO₂ vers les pièges. Ce fonctionnement est possible grâce à des électrovannes commandées par un programmateur et permettant l'inversion des flux dans les tamis moléculaire comme indiqué dans la figure 2. La désorption s'effectue par chauffage du tamis moléculaire grâce, par exemple, à une résistance chauffante placée dans le tamis et dont l'alimentation électrique est contrôlée par un programmateur.. Une pompe d'extraction permet d'extraire le CO₂ du tamis et de l'envoyer vers les pièges. Un régulateur permet d'ajuster la pression du flux de sortie à une valeur déterminée et constante, par exemple 0,7 bars. La régulation du débit est alors obtenue en plaçant dans chaque piège un filtre limiteur de débit qui permet d'obtenir un flux gazeux constant comprenant au moins 10g/heure de CO₂, par exemple 20g/heure de CO₂.

Le mode simultané se présente avec un système central comprenant au moins deux lits de matériau microporeux. L'un des lits permet l'adsorption et le stockage du CO₂, pendant que l'autre permet la désorption du CO₂, leur rôle étant inversé périodiquement et leur activité simultanée. Ainsi, le procédé de capture de moustique selon l'invention peut fonctionner en continu pendant une durée quelconque. Ce fonctionnement est possible grâce à des électrovannes commandées par un programmateur et permettant l'inversion des flux dans les tamis moléculaires comme indiqué dans la figure 3. La désorption s'effectue par chauffage du tamis moléculaire grâce à des résistances chauffantes placées dans les tamis et dont l'alimentation électrique est contrôlée par un programmateur. Une pompe d'extraction permet d'extraire le CO2 du tamis et de l'envoyer vers les pièges. Un régulateur permet d'ajuster la pression du flux de sortie à une valeur déterminée et constante, par exemple 0,7 bars. La régulation du débit est alors obtenue en plaçant dans chaque piège un filtre limiteur de débit qui permet d'obtenir un flux gazeux constant contenant, par exemple 20g/H de CO2.

Les exemples qui suivent servent à illustrer l'invention et ne doivent en aucune manière limiter l'étendue de l'objet divulgué dans les revendications.

A partir des exemples qui suivent et en fonction du matériau adsorbant choisi, il est possible de mettre au point un procédé comprenant d'autres combinaisons possibles des paramètres tels que :
- le fonctionnement avec séparation/diffusion du CO2 alternées ou simultanées,
- avec pré-dessiccation de l'air ou non,
- avec une durée de cycle séparation/diffusion du CO2 plus ou moins longue,
- avec une diffusion de CO2 alternative ou continue.

Les données quantitatives fournies dans ces exemples sont données par rapport aux matériaux de type solide microporeux choisis.

### Exemple 1 : Système centralisé, à séparation et diffusion de CO₂ alternés avec dessiccation de l'air entrant et avec un cycle long.

Dans cet exemple, le système centralisé alimente 10 pièges, accumule le CO₂ pendant 10 heures la nuit et le diffuse pendant 10 heures également, dans la journée.

La figure 4 correspond au procédé décrit dans cet exemple.

### Matériaux adsorbant:

L'adsorbant choisi est une Zéolithe 13X (sa forme Lithium LiSX)⁽¹⁾, disponible commercialement, avec une capacité d'adsorption du CO₂ de l'ordre de 3% à 25°C et à la pression atmosphérique et avec une concentration de CO₂ de 0,039%. Ce type d'adsorbant étant sensible à l'humidité, il est nécessaire d'assécher l'air avant son passage dans le tamis de zéolithe. L'air est asséché en le faisant passer à travers un tamis d'alumine avec une capacité d'adsorption d'H2O d'environ 18 à 20%.

### Description fonctionnelle :

L'air ambiant traverse d'abord un tamis asséchant, puis passe dans un tamis adsorbant du CO₂ et, l'air desséché et appauvri en CO₂ est rejeté dans l'atmosphère. Ces flux d'air sont contrôlés par des électrovannes dont le diamètre de passage est suffisant pour ne pas occasionner de perte de charge. Un ventilateur d'aspiration force le passage de l'air à travers les tamis.

A la fin du cycle d'adsorption, le contrôleur ferme les électrovannes d'admission d'air, arrête le ventilateur d'extraction d'air, et débute le cycle de désorption et diffusion du CO₂. Ceci est réalisé par la combinaison de deux actions : d'une part par l'échauffement du tamis par une résistance électrique noyée dans le matériau, et d'autre part par l'ouverture de l'électrovalve et la mise en route de la pompe d'extraction de CO₂, ceci créé une dépression dans le tamis et une surpression vers les pièges. Cette surpression est maintenue à une valeur déterminée par un limiteur de pression. Le CO₂ est acheminé vers les pièges par un tube. Dans chaque piège, un limiteur de débit constitué d'une restriction, permet de répartir le CO₂ de façon uniforme entre les pièges avec un débit qui dépend de la valeur de la pression.

La diffusion de CO2 est effectuée de façon continue ou alternative en activant et arrêtant la pompe d'extraction de façon cyclique (avec un cycle de quelques dizaines de seconde).

Le cycle de régénération du tamis desséchant est activé en même temps que celui de désorption/diffusion du CO2. Le tamis desséchant est chauffé en même temps que l'électrovalve et la pompe d'extraction d'H2O sont ouvertes. La pompe créée une dépression dans le tamis et la vapeur d'eau est évacuée vers l'extérieur ou elle se condense partiellement

### Dimensionnement :

Les dimensionnements ci-dessous, calculés pour un débit continu de 20g/heure/piège peuvent être divisés par 2 en adoptant un débit alternatif, fournissant une moyenne de 10g/heure/piège.

Il faut de l'ordre de 100kg de Zéolithe 13X pour accumuler au moins 2kg de CO2 qui seront diffusés dans la journée avec un débit de 200g/heure, ce qui permet d'avoir un débit de 20g/heure dans chaque piège.

Pour atteindre la saturation de la zéolithe en 10 heures, le ventilateur d'extraction d'air doit fournir un débit d'air de l'ordre de 350 m3/heure (soit un ventilateur de 20 à 25 cm de diamètre). La géométrie du tamis est adaptée de sorte que la vitesse de déplacement de l'air dans le tamis ne dépasse pas l'ordre de 0,3m/s, ce qui est réalisé avec une section de contact du tamis d'au moins 0,35 m2.

Pour la phase de désorption/diffusion de CO2, le tamis est chauffé à une température d'environ 180°C et la pompe d'extraction de CO2 doit permettre de créer une dépression de 200 mbars dans le tamis et une pression relative de 700 mbars en débitant un flux de 2litre/mn de CO2 vers les pièges.

Avec un air ayant un taux d'humidité relative de 80%, et une partie desséchante du système implémentée avec un seul tamis qui accumule l'eau pendant 10 heures, il faut environ 300 kg d'alumine.

Toute en conservant le fonctionnement alterné pour le CO2, il est possible d'utiliser un fonctionnement en tandem (comme dans l'exemple 2) pour la dessiccation, de façon à réduire la quantité d'alumine nécessaire.

La phase de régénération du desséchant est réalisée en chauffant l'alumine à 200°C et en créant une dépression d'environ 500 mbars avec une pompe d'extraction capable de débiter 15 litre/mn de vapeur d'eau.

### Exemple 2 : Système centralisé, à séparation et diffusion de CO2 simultanés, sans dessiccation de l'air entrant et avec un cycle moyen.

Dans cet exemple, le système centralisé alimente 10 pièges, avec un débit de 20g/heure/piège, fonctionnant avec 2 tamis opérant en tandem simultanément, l'un accumulant du CO2 pendant que l'autre le restitue, selon un cycle d'environ 1 heure.

La figure 3 correspond au procédé décrit dans cet exemple.

### Matériaux adsorbant :

L'adsorbant choisi est une fibre de cellulose imprégnée d'amine ^{(2,3)}, ayant une capacité d'adsorption du CO2 de l'ordre de 3% à 25°C à la pression atmosphérique et avec une concentration de CO2 de 0,039%. Avec ce type d'adsorbant, la présence d'humidité dans l'air favorise l'adsorption du CO2, il n'est donc pas nécessaire d'assécher l'air avant son passage dans le tamis moléculaire.

### Description fonctionnelle :

D'une façon cyclique, l'un des tamis est en phase d'adsorption et stockage du CO2 pendant que l'autre est en phase de désorption et diffusion de ce même CO2. La durée de ce cycle correspond au temps de saturation en CO2 pendant la phase d'adsorption.

Le tamis en phase d'adsorption est traversé par l'air ambiant qui, une fois appauvri en CO2, est rejeté dans l'atmosphère. Les deux électrovannes qui contrôlent l'admission et le rejet de l'air sont alors ouvertes. Ces électrovannes ont un diamètre de passage suffisant pour laisser passer un flux d'air suffisant sans occasionner de perte de charge. Un ventilateur d'aspiration force le passage de l'air à travers les tamis.

Les deux électrovannes correspondantes du tamis en phase de désorption sont fermées. Ce tamis est chauffé par une résistance électrique noyée dans le matériau, et le CO2 en est extrait par la pompe d'extraction du CO2, à travers l'électrovalve correspondante qui est alors ouverte. Le CO2 est acheminé vers les pièges par un tube. Dans chaque piège, un limiteur de débit constitué d'une restriction, permet de répartir le CO2 de façon uniforme entre les pièges avec un débit qui dépend de la valeur de la pression.

La cellulose aminée adsorbe également des molécules d'eau qui sont désorbées en même temps que le CO2 sous forme de vapeur d'eau. Afin d'éviter que la condensation de cette eau dans les tubes acheminant le CO2 vers les pièges ne trouble cet acheminement, un condenseur est placé dans le circuit du procédé.

La diffusion de CO2 est effectuée de façon continue ou alternative en activant et arrêtant la pompe d'extraction de façon cyclique (avec un cycle de quelques dizaines de s).

A la fin du cycle, le programmateur inverse les positions des électrovannes et de l'électrovalve ainsi que le chauffage du tamis.

### Dimensionnement :

Les dimensionnements ci-dessous, calculés pour un débit continu de 20g/heure/piège peuvent être divisés par 2 en adoptant un débit alternatif, fournissant une moyenne de 10g/heure/piège.

Il faut de l'ordre de 10kg de cellulose aminée pour accumuler au moins 200g de CO2 qui seront diffusés pendant 1 heure avec un débit de 200g/heure, ce qui permet d'avoir un débit de 20g/heure dans chaque piège.

Pour atteindre la saturation de la cellulose en 1 heure, le ventilateur d'extraction doit fournir un débit d'air de l'ordre de 350 m3/heure (soit un ventilateur de 20 à 25 cm de diamètre). La géométrie du tamis est adaptée de sorte que la vitesse de déplacement de l'air dans le tamis ne dépasse pas l'ordre de 0,3m/s, ce qui est réalisé avec une section de contact du tamis d'au moins 0,35 m2.

Pour la phase de désorption/diffusion de CO2, le tamis est chauffé à une température d'environ 95°C et la pompe d'extraction de CO2 permet de créer une dépression de 100 mbars dans le tamis et une pression relative de 700 mbars en débitant un flux de 21/mn de CO2 vers les pièges.

### Exemple 3 : Système à séparation et diffusion de CO2 simultanés, intégré dans un piège, sans dessiccation de l'air entrant et avec un cycle moyen.

Dans cet exemple, le système n'alimente qu'un seul piège, avec un débit de 20g/heure, fonctionnant avec 2 tamis opérant simultanément en tandem, l'un accumulant du CO2 pendant que l'autre le restitue, selon un cycle d'environ 1 heure.

La figure 8 correspond au procédé décrit dans cet exemple.

### Matériaux adsorbant :

L'adsorbant choisi est une fibre de cellulose imprégnée d'amine ^{(2,3)}, avec une capacité d'adsorption du CO2 de l'ordre de 3% à 25°C à la pression atmosphérique et avec une concentration de CO2 de 0,039%. Avec ce type d'adsorbant, la présence d'humidité dans l'air favorise l'adsorption du CO2, il n'est donc pas nécessaire d'assécher l'air avant son passage dans le tamis moléculaire.

### Description fonctionnelle :

D'une façon cyclique, l'un des tamis est en phase d'adsorption et stockage du CO2 pendant que l'autre est en phase de désorption et diffusion de ce même CO2. La durée de ce cycle correspond au temps de saturation en CO2 pendant la phase d'adsorption.

Le tamis en phase d'adsorption est traversé par l'air ambiant qui, une fois appauvri en CO2, est rejeté dans l'atmosphère. Les deux électrovannes qui contrôlent l'admission et le rejet de l'air sont alors ouvertes. Ces électrovannes ont un diamètre de passage suffisant pour laisser passer un flux d'air suffisant sans occasionner de perte de charge. Un ventilateur d'aspiration force le passage de l'air à travers les tamis. Ce même ventilateur peut également être utilisé dans le piège pour la capture des moustiques, comme indiqué sur la figure 7.

Les deux électrovannes correspondantes du tamis en phase de désorption sont fermées. Le tamis est chauffé par une résistance électrique noyée dans le matériau et le CO2 en est extrait par la pompe d'extraction du CO2, à travers l'électrovalve correspondante qui est alors ouverte. Le CO2 est acheminé vers les pièges par un tube. Dans chaque piège, un limiteur de débit constitué d'une restriction, permet de répartir le CO2 de façon uniforme entre les pièges avec un débit qui dépend de la valeur de la pression.

La vapeur d'eau rejetée avec le CO2 ne gêne pas le fonctionnement du piège, au contraire l'humidité attire les moustiques.

La diffusion de CO2 est effectuée de façon continue ou alternative en activant et arrêtant la pompe d'extraction de façon cyclique (avec un cycle de quelques dizaines de s).

A la fin du cycle, le programmateur inverse les positions des électrovannes et de l'électrovalve ainsi que le chauffage du tamis.

### Dimensionnement :

Les dimensionnements ci-dessous, calculés pour un débit continu de 20g/heure peuvent être divisés par 2 en adoptant un débit alternatif, fournissant une moyenne de 10g/heure/piège.

Il faut de l'ordre de 1kg de cellulose aminée pour accumuler au moins 20g de CO2 qui seront diffusés pendant 1H avec un débit de 20g/H, ce qui permet d'avoir un débit de 20g/heure dans le piège.

Pour atteindre la saturation de la cellulose en 1 heure, le ventilateur d'extraction fournit un débit d'air de l'ordre de 35 m3/H (soit un ventilateur de 10cm de diamètre). La géométrie du tamis est adaptée de sorte que la vitesse de déplacement de l'air dans le tamis ne dépasse pas l'ordre de 0,3m/s, ce qui est réalisé avec une section de contact du tamis d'au moins 350 cm2.

Pour la phase de désorption/diffusion de CO2, le tamis est chauffé à une température d'environ 95°C et la pompe d'extraction de CO2 permet de créer une dépression de 100 mbars dans le tamis et une pression relative de 700 mbars en débitant un flux de 200ml/mn de CO2 dans le piège.

### Exemple 4 : Système à séparation et diffusion de CO2 alternés, intégré dans un piège, sans dessiccation de l'air entrant et avec un cycle court.

Dans cet exemple, qui résulte en partie d'une combinaison des trois exemples précédents, le système n'alimente qu'un seul piège, avec un débit de 10g/heure en moyenne, fonctionnant avec un seul tamis opérant alternativement en mode adsorption puis désorption, selon un cycle très court de 30s.

### Matériaux adsorbant :

L'adsorbant choisi est une fibre de cellulose imprégnée d'amine ⁽¹⁾, ayant une capacité d'adsorption du CO2 de l'ordre de 3% à 25°C à la pression atmosphérique et avec une concentration de CO2 de 0,039%. Avec ce type d'adsorbant, la présence d'humidité dans l'air favorise l'adsorption du CO2, il n'est donc pas nécessaire d'assécher l'air avant son passage dans le tamis moléculaire.

### Description fonctionnelle :

Son schéma fonctionnel est similaire au premier exemple, sans la dessiccation de l'air.

Pour parvenir à un cycle aussi court, le procédé consiste à utiliser un fonctionnement en mode « pressure swing » uniquement, sans échauffement du tamis lors de la désorption. Il faut alors que la dépression créée par la pompe d'extraction du CO2 soit beaucoup plus intense.

### Dimensionnement :

Du fait du cycle très court il est également nécessaire de tenir compte d'un rendement de l'adsorption beaucoup plus faible. Il faut de l'ordre de 500g de cellulose aminée pour accumuler au moins 170 mg de CO2 qui seront diffusés pendant 30s avec un débit de 20g/heure.

Pour atteindre une saturation suffisante de la cellulose en 30s, le ventilateur d'extraction d'air fournit un débit d'air de l'ordre de 50 m3/heure (soit un ventilateur de 10cm ou 12cm de diamètre). La géométrie du tamis est adaptée de sorte que la vitesse de déplacement de l'air dans le tamis ne dépasse pas de l'ordre de 0,3m/s, ce qui est réalisé avec une section de contact du tamis d'au moins 500cm².

Pour la phase de désorption/diffusion de CO2, la pompe d'extraction de CO2 permet de créer une dépression de 900 mbars dans le tamis avec un débit de 400 ml/mn et une sortie à pression atmosphérique

### RÉFÉRENCES

1N.R. Stuckert, RT Yang, CO2 capture from the atmosphère and simultaneous concentration using zeolites and amine grafted SBA-15,Environmental Science & Techno45 (2011) 10257-10264.
2C. Gebald, J.A. Wurzbacher, P. Tingaut, T. Zimmermann, A. Steinfeld, Amine-based nanofibrillated cellulose as adsorbent for CO2 capture, Environmental Science & Techno, 45 (2011) 9101-9108.
3J.A. Wurzbacher, C. Gebald, N. Piatkowski, A. Steinfeld, Concurrent separation of CO2 and H2O from air by a temperature-vacuum swing adsorption / desorption cycle, Environmental Science & Techno, 46 (2012) 9191-9198.

## Revendications

1. Procédé de capture de moustiques par production de dioxyde de carbone (CO₂) vers un ou plusieurs pièges à moustiques, **caractérisé en ce que** le CO₂ est séparé de l'air ambiant à travers au moins un système central comprenant au moins un lit de matériaux de type solide microporeux, ledit procédé permettant à partir d'un flux entrant d'air ambiant comprenant 0,039% de CO₂ dans le système central de produire vers un ou plusieurs pièges un flux sortant gazeux à débit régulier contrôlé comprenant au moins 10 g/heure/piège de CO2.

2. Procédé selon la revendication 1 **caractérisé en ce que** le flux sortant gazeux à débit régulier contrôlé est continu ou alternatif.

3. Procédé selon les revendications 1 et 2 **caractérisé en ce que** le flux sortant gazeux comprend entre 50 et 100% de CO₂, le reste pouvant être de l'air humide.

4. Procédé selon les revendications 1 et 2 **caractérisé en ce que** le flux sortant gazeux est composé de CO₂ pur.

5. Procédé selon l'une des revendications 1 à 4 **caractérisé en ce que** le lit de matériaux de type solide microporeux présente une capacité d'adsorption du CO₂ au minimum de 0,4 mol/kg à pression atmosphérique et à température ambiante.

6. Procédé selon l'une des revendications 1 à 5 **caractérisé en ce que** le lit de matériaux de type solide microporeux est constitué de zéolithes ou de celluloses greffées avec des amines.

7. Procédé selon la revendication 6 **caractérisé en ce que** le lit de matériaux de type solide microporeux est constitué de zéolithes LI-LSX.

8. Procédé selon l'une des revendications précédentes **caractérisé en ce qu'**il comprend en outre au moins un lit de dessiccation d'eau.

9. Procédé selon la revendication 6 **caractérisé en ce que** le lit de matériaux de type solide microporeux est constitué de celluloses greffées avec des amines.

10. Procédé selon les revendications 1 à 5 **caractérisé en ce que** le ou les lits de matériau microporeux permet l'adsorption, le stockage et la désorption du CO₂ de l'air ambiant de manière alternée ou simultanée.

11. Procédé selon l'une des revendications précédentes **caractérisé en ce que** le CO₂ est séparé de l'air ambiant et produit vers des pièges de manière continue à travers deux lits de matériaux opérant en tandem, l'un permettant l'adsorption et le stockage du CO₂, l'autre permettant la désorption du CO₂.

## Patentansprüche

1. Mückenfangverfahren durch die Produktion von Kohlendioxid (CO₂) zu einer oder mehreren Mückenfalle(n), **dadurch gekennzeichnet, dass** das CO₂ von der Umgebungsluft über wenigstens ein zentrales Systems getrennt ist, das wenigstens ein Bett aus Materialien vom Typ mikroporöser Feststoff umfasst, wobei das genannte Verfahren ausgehend von einem eintretenden Strom aus Umgebungsluft, umfassend 0,039 % CO₂, im zentralen System die Produktion eines ausgehenden gashaltigen Stroms mit kontrolliertem regelmäßigem Durchsatz, umfassend wenigstens 10 g/Stunde/CO₂-Falle zu einer oder mehreren Falle(n) erlaubt.

2. Verfahren gemäß Anspruch 1, **dadurch gekennzeichnet, dass** der austretende gashaltige Strom mit kontrolliertem regelmäßigem Durchsatz kontinuierlich oder alternativ ist.

3. Verfahren gemäß Anspruch 1 und 2, **dadurch gekennzeichnet, dass** der austretende gashaltige Strom zwischen 50 und 100 % CO₂ umfasst, wobei der Rest feuchte Luft sein kann.

4. Verfahren gemäß den Ansprüchen 1 und 2, **dadurch gekennzeichnet, dass** der austretende gashaltige Strom sich auch reinem CO₂ zusammensetzt.

5. Verfahren gemäß einem der Ansprüche 1 bis 4, **dadurch gekennzeichnet, dass** das Bett aus Materialien vom Typ mikroporöser Feststoff eine Adsorptionskapazität des CO₂ mit einem Minimum von 0,4 mol/kg mit atmosphärischem Druck und bei Umgebungstemperatur aufweist.

6. Verfahren gemäß irgendeinem der Ansprüche 1 bis 5, **dadurch gekennzeichnet, dass** das Bett aus Materialien vom Typ mikroporöser Feststoff aus Zeolith oder mit Aminen aufgepfropften Zellulosen gebildet ist.

7. Verfahren gemäß Anspruch 6, **dadurch gekennzeichnet, dass** das Bett aus Materialien vom Typ mikroporöser Feststoff aus Zeolithen LI-LSX gebildet ist.

8. Verfahren gemäß irgendeinem der voranstehenden Ansprüche, **dadurch gekennzeichnet, dass** es darüber hinaus wenigstens ein Wassertrocknungsbett umfasst.

9. Verfahren gemäß Anspruch 6, **dadurch gekennzeichnet, dass** das Bett aus Materialien vom Typ mikroporöser Feststoff aus mit Aminen aufgepfropften Zellulosen gebildet ist.

10. Verfahren gemäß Anspruch 1 bis 5, **dadurch gekennzeichnet, dass** das Bett oder die Betten aus mikroporösem Material die Adsorption, die Lagerung und die Desorption von CO₂ aus der Umgebungsluft auf alternierende oder gleichzeitige Weise zulässt.

11. Verfahren gemäß einem der voranstehenden Ansprüche, **dadurch gekennzeichnet, dass** das CO₂ von der Umgebungsluft getrennt ist und auf kontinuierliche Weise durch zwei im Tandem wirkende Materialbetten, von denen eines die Adsorption und die Lagerung des CO₂ erlaubt und das andere die Desorption des CO₂ erlaubt, zu Fallen produziert wird.

## Claims

1. Process for capturing mosquitoes by producing carbon dioxide (CO₂) directed towards one or more mosquito traps, **characterised in that** the CO₂ is separated from the ambient air via at least one central system comprising at least one bed of microporous solid type materials, said process enabling an incoming flow of ambient air comprising 0.039% CO₂ in the central system to be used to produce, in the direction of one or more traps, a gaseous outgoing flow with a controlled regular flow rate comprising at least 10 g/hour/trap of CO₂.

2. Process according to claim 1 **characterised in that** the gaseous outgoing flow with a controlled regular flow rate is continuous or alternate.

3. Process according to claims 1 and 2 **characterised in that** the gaseous outgoing flow comprises between 50 and 100% CO₂, while the remainder may be humid air.

4. Process according to claims 1 and 2 **characterised in that** the gaseous outgoing flow is composed of pure CO₂.

5. Process according to one of claims 1 to 4 **characterised in that** the bed of microporous solid type materials presents a CO₂ adsorption capacity of at least 0.4 mol/kg at atmospheric pressure and at ambient temperature.

6. Process according to one of claims 1 to 5 **characterised in that** the bed of microporous solid type materials consists of zeolites or amine-grafted cellulose fibres.

7. Process according to claim 6 **characterised in that** the bed of microporous solid type materials consists of LI-LSX zeolites.

8. Process according to one of the above claims **characterised in that** it additionally comprises at least one water drying bed.

9. Process according to claim 6 **characterised in that** the bed of microporous solid type materials consists of amine-grafted cellulose fibres.

10. Process according to claims 1 to 5 **characterised in that** the microporous material bed(s) enable the adsorption, storage and desorption of the CO₂ from the ambient air alternately or simultaneously.

11. Process according to one of the above claims **characterised in that** the CO₂ is separated from the ambient air and directed continuously towards traps through two material beds operating in tandem, one enabling the adsorption and storage of the CO₂ and the other enabling the desorption of the CO₂.
